# EUROPÄISCHE PATENTSCHRIFT

(11) **EP 3 347 618 B1**
(45) Veröffentlichungstag und Bekanntmachung des Hinweises auf die Patenterteilung: **06.10.2021**
(21) Anmeldenummer: 16760050.1
(22) Anmeldetag: 31.08.2016
(51) Int. Cl.: F16G 11/04, A63B 9/00

(54) **VERBINDER**
CONNECTOR
CONNECTEUR

(30) Priorität: 11.09.2015 DE 102015115388
(43) Veröffentlichungstag der Anmeldung: 18.07.2018
(73) Patentinhaber: Berliner Seilfabrik GmbH & Co., 13407 Berlin (DE)
(72) Erfinder: KÖHLER, Karl Heinz, 13467 Berlin (DE)
(74) Vertreter: Gulde & Partner
(86) Internationale Anmeldenummer: PCT/EP2016/070495
(87) Internationale Veröffentlichungsnummer: WO 2017/042071

(56) Entgegenhaltungen:
- EP-A1- 1 421 977
- DE-C- 701 532
- FR-A1- 2 866 533

## Beschreibung

Die Erfindung betrifft einen Verbinder zur Befestigung eines Seils an einer Tragstruktur in einem Verbindungssystem sowie eine Tragstruktur mit dem Verbindungssystem.

Tragstrukturen aus mechanischen Strukturelementen und zwischen diesen gespannten Seilen sind grundsätzlich bekannt. Derartige Tragstrukturen kommen unter anderem auch im Bereich von Freizeitanlagen, rein exemplarisch bei Kletteranlagen auf Kinderspielplätzen zum Einsatz. Weitere mögliche Einsatzbereiche sind ebenfalls rein exemplarisch Sportanlagen, Gebilden auf dem Gebiet der Kunst oder sonstige Bereiche, in denen belastbare, sichere, flexibel gestaltbare und mit geringem Aufwand realisierbare Tragstrukturen benötigt werden.

Beispielsweise offenbart die DE 701 532 C eine Seilklemme mit Klemmstücken, die mit einem Innenkonus versehen sind. Dabei ist jeweils eine Kugel zwischen einem Seil und einem Innenkonus angeordnet, wobei der Innenkonus von einer Überwurfmutter gebildet wird.

Bei derartigen Tragstrukturen besteht eine Herausforderung darin, diese an ihrem Bestimmungsort zu montieren. Häufig weisen derartige Tragstrukturen komplexe Formen auf oder sind an nur schwer zugänglichen Orten aufzustellen. Insbesondere bei der Verbindung der Seile mit den Strukturelementen besteht eine Schwierigkeit darin, dass die Seile konventionell durch die Strukturelemente hindurch geführt und rückseitig an diesen verschraubt werden müssen.

Die Aufgabe der vorliegenden Erfindung besteht somit darin, einen Verbinder zur Befestigung eines Seils an einer Tragstruktur anzugeben, der einfach und sicher montierbar ist und zudem mit geringem Aufwand herstellbar ist.

Der Gegenstand der vorliegenden Erfindung betrifft ein Verbindungssystem, umfassend einen Verbinder zur Befestigung eines Seils an einer Tragstruktur, umfassend eine mit einem Tragstrukturelement form- und/oder kraft- oder stoffschlüssig verbindbare Hülse mit einer inneren Mantelfläche, die wenigstens einen Bereich mit einem Innengewinde aufweist und die wenigstens einen weiteren Bereich zur Führung eines Seils aufweist, weiterhin umfassend eine Einschraubhülse, die zumindest abschnittsweise ein Außengewinde zum Einschrauben in die Hülse aufweist und die weiterhin eine innere Mantelfläche zur Führung eines Seils aufweist, sowie ein durch die Hülse und die Einschraubhülse des Verbinders führbares Seil. Erfindungsgemäß ist vorgesehen, dass ein Innendurchmesser des Bereichs größer ist, als ein weiterer Innendurchmesser des weiteren Bereichs und die Bereiche zumindest abschnittsweise durch eine Fase voneinander abgegrenzt sind, so dass wenigstens ein Kugelelement zwischen der Fase, einer Andruckfläche der Einschraubhülse und einem von der Hülse und der Einschraubhülse führbaren Seil positionierbar ist und durch Einschrauben der Einschraubhülse in die Hülse das führbare Seil unter lokaler Verformung des Seils unter Beteiligung von Kraftschluss entlang einer Längsachse fixierbar ist.

Dies bietet den Vorteil, dass eine einfache und sichere Montage selbst dann gewährleistet ist, wenn der Ort der Montage lediglich von einer Seite zugänglich ist. Vorteilhafterweise kann ein Seil mit dem erfindungsgemäßen Verbinder an einem Tragstrukturelement montiert werden, wobei das Tragstrukturelement lediglich von einer Seite her zugänglich sein muss. Zudem ist der erfindungsgemäße Verbinder sehr robust und belastbar, einfach aufgebaut und mit geringem Aufwand herstellbar. Weiterhin vorteilhaft kann eine freie Seillänge mit dem Verbinder flexibel eingestellt werden. Außerdem ist der Verbinder wartungsfreundlich und mit geringem Aufwand wieder demontierbar.

In bevorzugter Ausgestaltung der vorliegenden Erfindung ist vorgesehen, dass eine Vielzahl von Kugelelementen zwischen der Fase, der Einschraubhülse und dem führbaren Seil positionierbar sind.

Dies bietet den Vorteil, dass eine Fixierung einerseits noch sicherer möglich wird. Weiterhin vorteilhaft ist das Seil im Wesentlichen konzentrisch zu den Mantelflächen der Hülse und der Einschraubhülse führbar und fixierbar.

In weiterer bevorzugter Ausgestaltung der vorliegenden Erfindung ist vorgesehen, dass die Fase zur Abgrenzung der Bereiche rotationssymmetrisch ausgebildet ist.

Dies bietet den Vorteil, dass der Fertigungsaufwand reduziert wird. Weiterhin bietet dies den Vorteil, dass die Kugelelemente eine größere Anlagefläche haben und somit leichter montierbar sind.

In weiterer bevorzugter Ausgestaltung der vorliegenden Erfindung ist vorgesehen, dass ein Verhältnis eines minimalen durch die Kugelelemente bildbaren Ringdurchmessers zu einem Durchmesser des führbaren Seils bei 0,6 bis 0,9 liegt.

Dem zuständigen Fachmann ist ohne Weiteres bewusst, dass er zur Verwirklichung dieser bevorzugten Ausführungsform der Erfindung beliebige Seildurchmesser und Durchmesser für die Kugelelemente wählen kann, die in Verbindung mit einer entsprechenden Gestaltung der Hülse und der Einschraubhülse zu dem genannten Verhältnis führen, wenn die Einschraubhülse in die Hülse eingeschraubt wird, während die Kugelelemente im Bereich der Fase der Hülse angeordnet sind und ein Seil von der Hülse und der Einschraubhülse geführt wird. Somit ist der Verbinder vorteilhaft beliebig skalierbar. Grundsätzlich kann die Skalierung beliebig erfolgen, solange das Seil unter Beteiligung von Kraftschluss in Anbetracht der im Verwendungsfall zu erwartenden Belastungen noch sicher fixiert ist.

Experimentelle Untersuchungen haben gezeigt, dass eine besonders sichere und haltbare Verbindung realisierbar ist, wenn das Verhältnis in diesem Bereich liegt. Besonders bevorzugt liegt das Verhältnis bei 0,65 bis 0,8 und ganz besonders bevorzugt bei 0,68 bis 0,76.

In weiterer bevorzugter Ausgestaltung der vorliegenden Erfindung ist vorgesehen, dass das Kugelelement oder die Kugelelemente in oder an einem ein- oder mehrteiligen wenigstens anteilig formelastische Eigenschaften aufweisenden Stützteil angeordnet sind. Das Stützteil kann rein beispielhaft ein Schrumpfschlauch sein.

Dies bietet den Vorteil, dass die Montage signifikant vereinfacht wird. Ist das Stützteil beispielsweise einteilig, so wird die Montage weiter vereinfacht. Ist es beispielsweise mehrteilig, so sind die Kugelelemente einfacher in ihre finale Lage zu bewegen, in der das Seil geklemmt wird. Insbesondere in schwierigen Einbaulagen oder auch über Kopf montierten Verbindungen ist die Montage von sehr geringem Aufwand geprägt. Weiterhin wird auch die Qualität des Verbinder signifikant erhöht, da die Kugelelemente zur Montagevorbereitung kommissioniert werden, sowie auch farblich codiert werden können und somit Fehlereinflüsse reduziert werden. Ein derartiges Stützteil kann auch als Korrosionsschutz verwendet werden. Hierdurch wird zum einen die Qualität weiter erhöht, aber insbesondere auch die Sicherheit des Verbinders.

In weiterer bevorzugter Ausgestaltung der vorliegenden Erfindung ist vorgesehen, dass 11 bis 12 Kugelelemente mit einem Durchmesser von 4,5 mm für ein führbares Seil mit einem Durchmesser von 18 mm vorgesehen sind.

Experimentelle Untersuchungen haben gezeigt, dass hier bei üblicherweise verwendeten Seilen im Bereich von Kletteranlagen für Kinderspielplätze und ähnlichen Einsatzbereichen besonders vorteilhafte Bedingungen für eine sehr belastbare und haltbare sowie einfach montierbare Verbindung vorliegen.

In weiterer bevorzugter Ausgestaltung der vorliegenden Erfindung ist vorgesehen, dass die Einschraubhülse Anlageflächen für ein Einschraubwerkzeug aufweist.

Dies bietet den Vorteil, dass der Verbinder besonders einfach, sicher und schnell montierbar ist.

Das Verbindungssystem der Erfindung, umfassend wenigstens den Verbinder zur Befestigung des Seils an der Tragstruktur sowie wenigstens das durch die Hülse und die Einschraubhülse des Verbinders führbare Seil, bietet den Vorteil, dass das Verbindungssystem sehr sicher, robust und belastbar ist, sowie einfach aufgebaut, flexible und mit geringem Aufwand herstellbar, montierbar, demontierbar sowie wartungsfreundlich ist.

Ein weiterer Aspekt der vorliegenden Erfindung betrifft eine Tragstruktur, umfassend wenigstens ein erfindungsgemäßes Verbindungssystem sowie wenigstens ein Tragstrukturelement.

Dies bietet den Vorteil, dass die Tragstruktur sehr sicher, robust und belastbar ist, sowie einfach aufgebaut, flexible und mit geringem Aufwand herstellbar, montierbar, demontierbar sowie wartungsfreundlich ist.

In bevorzugter Ausgestaltung der vorliegenden Erfindung ist vorgesehen, dass die Tragstruktur ein oder mehrere zusätzliche Spannelemente für Seile zur Herstellung einer schraubenartigen Verbindung umfasst.

Somit werden die Qualität und die Sicherheit verbessert und die Montage weiter vereinfacht.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Verbinders zur Befestigung eines Seils an einer Tragstruktur in einem erfindungsgemäßen Verbindungssystem in einer bevorzugten Ausführungsform; und
- Figur 2: eine schematische Darstellung einer erfindungsgemäßen Tragstruktur in einer bevorzugten Ausführungsform.

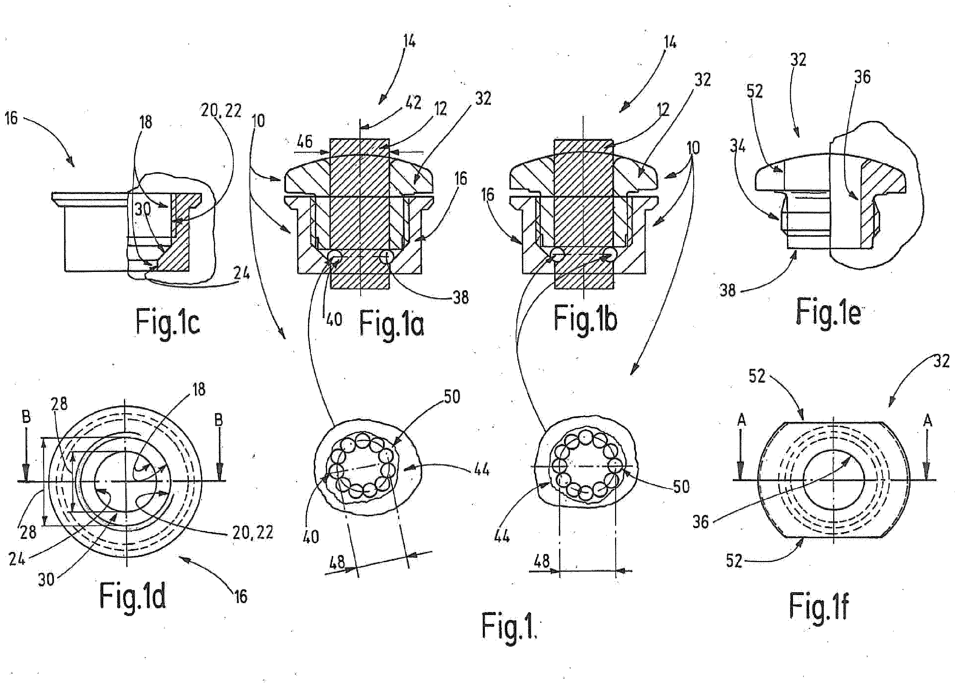

Figur 1 zeigt eine schematische Darstellung eines Verbinders 10 zur Befestigung eines hier lediglich angedeuteten Seils 12 an einer hier nicht dargestellten Tragstruktur in einem erfindungsgemäßen Verbindungssystem 14 in einer bevorzugten Ausführungsform. Ohne das lediglich angedeutete Seil 12 entspricht das in Figur 1 Gezeigte dem Verbinder 10 mit dem Seil 12 dem erfindungsgemäßen Verbindungssystem 14. Der Verbinder 10 umfasst, wie in Figur 1A und 1B gezeigt, eine mit einem hier nicht dargestellten Tragstrukturelement in diesem Ausführungsbeispiel stoffschlüssig verbindbare Hülse 16. Die Hülse 16 ist aus einem schweißbaren Werkstoff, vorzugsweise Stahl oder Edelstahl als Drehteil hergestellt. Die Figuren 1A und 1B zeigen Querschnittsansichten, deren Schnittlinien in den Figuren 1D und 1F ersichtlich sind. Im Wesentlichen zeigen die Figuren 1A und 1B dieselben Komponenten, so dass eine Bezeichnung nicht durchgängig erfolgt. Die Hülse 16 ist in der Figur 1C mit einem Ausbruch in einer seitlichen Ansicht und in Figur 1D ungeschnitten in einer Draufsicht dargestellt. Die Hülse 16 weist eine innere Mantelfläche 18 auf. Die innere Mantelfläche 18 weist einen Bereich 20 mit einem Innengewinde 22 auf. Die Hülse 16 weist an ihrer inneren Mantelfläche 18 einen weiteren Bereich 24 zur Führung eines Seils 12 auf. Ein Innendurchmesser 26 des Bereichs 20 ist größer als ein weiterer Innendurchmesser 28 des weiteren Bereichs 24. Die Bereiche 20, 24 sind durch eine Fase 30 voneinander abgegrenzt. Weiterhin umfasst der Verbinder 10 eine Einschraubhülse 32. Die Einschraubhülse 32 ist in der Figur 1E mit einem Ausbruch in einer seitlichen Ansicht und in Figur 1F ungeschnitten in einer Draufsicht dargestellt. Die Einschraubhülse 32 ist vorzugsweise ebenfalls aus Stahl oder Edelstahl als Drehteile hergestellt. Die Einschraubhülse 32 und die Hülse 16 sind bevorzugt aus einem nicht korrodierenden Werkstoff sowie einer unter Wechselwirkung nicht korrodierenden Werkstoffkombination hergestellt. Die Einschraubhülse 32 weist abschnittsweise ein Außengewinde 34 zum Einschrauben in das Innengewinde 22 der Hülse 16 auf. Die Einschraubhülse 32 weist zudem eine innere Mantelfläche 36 auf, an der ein Seil 12 führbar ist. Zwischen der Fase 30, einer Andruckfläche 38 der Einschraubhülse 32 und einem von der Hülse 16 und der Einschraubhülse 32 führbaren Seil 12 ist wenigstens ein Kugelelement 40 positionierbar. Durch Einschrauben der Einschraubhülse 32 in die Hülse 16 ist das führbare Seil 12 unter lokaler Verformung des Seils 12 und unter Beteiligung von Kraftschluss entlang seiner Längsachse 42 fixierbar. In diesem Ausführungsbeispiel ist eine Vielzahl von Kugelelementen 44 zwischen der Fase 30 und der Einschraubhülse 32 sowie dem führbaren Seil 12 positionierbar. Zu diesem Zweck ist die Fase 30 zur Abgrenzung der Bereiche 20, 24 rotationsymmetrisch ausgebildet. In diesem Ausführungsbeispiel ist der Verbinder 10 für ein führbares Seil 12 mit einem Durchmesser 46 von 18 mm ausgelegt. Zu diesem Zweck sind bevorzugt 11 oder 12 Kugelelemente 44 vorgesehen. Die Kugelelemente 44 haben in diesem Ausführungsbeispiel jeweils einen Durchmesser von 4,5 mm. Figur 1A zeigt eine Variante mit 11 Kugelelementen 44 und Figur 1B zeigt eine Variante mit 12 Kugelelementen 44 des Verbinders 10. Zusammen mit dem Seil 12 bildet dieser das erfindungsgemäße Verbindungssystem 14. Ein Verhältnis eines minimalen durch die Kugelelemente 44 bildbaren Ringdurchmessers 48 zu dem Durchmesser 46 des Seils 12 liegt somit in einem Bereich von 0,6 bis 0,9. Die Kugelelemente 44 sind in einem anteilig formelastische Eigenschaften aufweisenden Stützteil 50 angeordnet. Das Stützteil 50 kann beispielsweise ein Schlauch, beispielsweise auch Schrumpfschlauch, aus einem Kunststoff sein. In dem vorliegenden Ausführungsbeispiel ist das Stützteil 50 zweigeteilt. Weiterhin weist die Einschraubhülse 32 Anlageflächen 52 für ein hier nicht dargestelltes Einschraubwerkzeug auf.

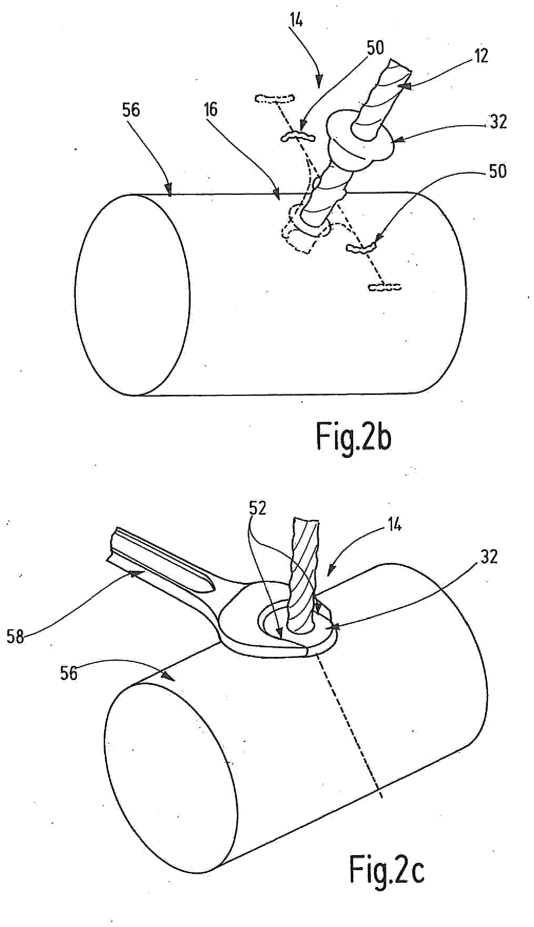

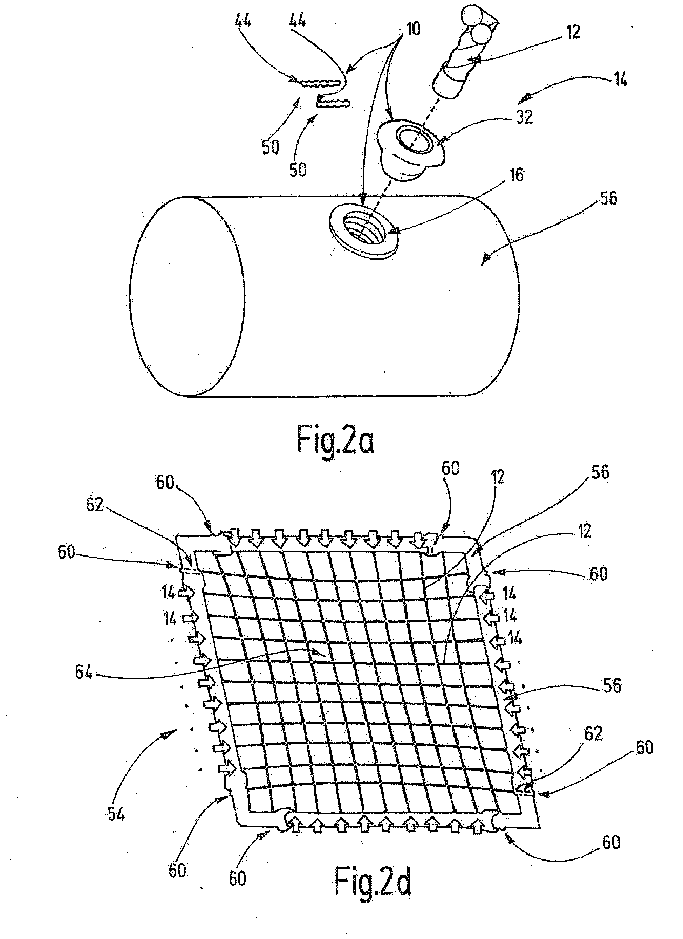

Figur 2 zeigt eine schematische Darstellung einer erfindungsgemäßen Tragstruktur 54 in einer bevorzugten Ausführungsform. Sofern Bezugszeichen verwendet werden, die mit denen der Figur 1 identisch sind, so beschreiben diese gleiche Merkmale und gelten zumindest ergänzend auch für Figur 2. Die Tragstruktur 54 umfasst eine Vielzahl erfindungsgemäßer Verbindungssysteme 14 sowie mehrere Tragstrukturelemente 56. Die Figuren 2A, 2B und 2C zeigen exemplarisch anhand eines abschnittsweise dargestellten Tragstrukturelements 56 und eines der Verbindungssysteme 14, wie mit diesem über einen Verbinder 10 ein Seil 12 an dem Tragstrukturelement 56 fixierbar ist. Figur 2A zeigt zunächst, die Ausgangssituation, in der einer Hülse 16 stoffschlüssig mit dem Tragstrukturelement 56 verbunden ist. Die Einschraubhülse 32 und die Kugelelemente 44, die in diesem Ausführungsbeispiel zur Erleichterung der Montage in zwei separaten Stützteilen 50 angeordnet sind, und das Seil 12 befinden sich hier in einem noch nicht montierten Zustand. Figur 2B zeigt weiterhin, wie das Seil 12 durch die Einschraubhülse 32 und die Hülse 16 geführt ist und an deren inneren Mantelflächen 18, 36 geführt wird. Die Kugelelemente 44 in den Stützteilen 50 werden in die Hülse 16 im Bereich einer Fase 30 positioniert, bevor die Einschraubhülse 32 in die Hülse 16 eingeschraubt wird. Den Vorgang des Einschraubens zeigt Figur 2C. Dabei kommt ein Einschraubwerkzeug 58 zum Einsatz, welches an den Anlageflächen 52 der Einschraubhülse 32 einsetzbar ist. Bevorzugt wird die Einschraubhülse 32 so weit in die Hülse 16 eingeschraubt, bis die Kugelelemente 44 einen minimalen bildbaren Ringdurchmesser 48 bilden. In diesem Zustand ist vorzugsweise ein Restspalt zwischen der Einschraubhülse 32 und der Hülse 16 zwischen 1 mm und 2 mm vorhanden. Figur 2D zeigt schließlich die Tragstruktur 54 mit einer Vielzahl von Seilen 12, die über jeweils zwei Verbindungssysteme 14 mit unterschiedlichen Tragstrukturelementen 56 verbunden sind. Die Tragstruktur 54 umfasst zusätzliche Spannelemente 60 für einige der Seile 12 zur Herstellung einer schraubenartigen Verbindung 62. Diese dienen einer Spannung eines durch die Seile 12 gebildeten Netzes 64. Die Tragstruktur 54 kann insbesondere zu einer Kletterstruktur im Bereich von Kinderspielplätzen konstruktiv weiter ausgebildet sein.

### Bezugszeichenliste

- 10: Verbinder
- 12: Seil
- 14: Verbindungssystem
- 16: Hülse
- 18: innere Mantelfläche
- 20: Bereich
- 22: Innengewinde
- 24: Bereich
- 26: Innendurchmesser
- 28: Innendurchmesser
- 30: Fase
- 32: Einschraubhülse
- 34: Außengewinde
- 36: innere Mantelfläche
- 38: Andruckfläche
- 40: Kugelelement
- 42: Längsachse
- 44: Kugelelement
- 46: Durchmesser
- 48: Ringdurchmesser
- 50: Stützteil
- 52: Anlagefläche
- 54: Tragstruktur
- 56: Tragstrukturelement
- 58: Einschraubwerkzeug
- 60: Spannelement
- 62: Verbindung
- 64: Netz

## Patentansprüche

1. Verbindungssystem (14), umfassend wenigstens:
- einen Verbinder (10) zur Befestigung eines Seils (12) an einer Tragstruktur (54), umfassend eine mit einem Tragstrukturelement (56) form- und/oder kraft- oder stoffschlüssig verbindbare Hülse (16) mit einer inneren Mantelfläche (18), die wenigstens einen Bereich (20) mit einem Innengewinde (22) aufweist und die wenigstens einen weiteren Bereich (24) zur Führung eines Seils (12) aufweist, weiterhin umfassend eine Einschraubhülse (32), die zumindest abschnittsweise ein Außengewinde (34) zum Einschrauben in die Hülse (16) aufweist und die weiterhin eine innere Mantelfläche (36) zur Führung eines Seils (12) aufweist, sowie
- ein durch die Hülse (16) und die Einschraubhülse (32) des Verbinders (10) führbares Seil (12),
und wenigstens ein Kugelelement (40)
**dadurch gekennzeichnet, dass**
ein Innendurchmesser (26) des Bereichs (20) größer ist, als ein weiterer Innendurchmesser (28) des weiteren Bereichs (24) und die Bereiche (20, 24) zumindest abschnittsweise durch eine Fase (30) voneinander abgegrenzt sind, so dass das wenigstens ein Kugelelement (40) zwischen der Fase (30), einer Andruckfläche (38) der Einschraubhülse (32) und einem von der Hülse (16) und der Einschraubhülse (32) führbaren Seil (12) positionierbar ist und durch Einschrauben der Einschraubhülse (32) in die Hülse (16) das führbare Seil (12) unter lokaler Verformung des Seils (12) unter Beteiligung von Kraftschluss entlang einer Längsachse (42) fixierbar ist.

2. Verbindungssystem (14) nach Anspruch 1, **dadurch gekennzeichnet, dass** eine Vielzahl von Kugelelementen (44) zwischen der Fase (30), der Einschraubhülse (32) und dem führbaren Seil (12) positionierbar sind.

3. Verbindungssystem (14) nach einem der Ansprüche 1 bis 2, **dadurch gekennzeichnet, dass** die Fase (30) zur Abgrenzung der Bereiche (20, 24) rotationssymmetrisch ausgebildet ist.

4. Verbindungssystem (14) nach einem der Ansprüche 2 oder 3, **dadurch gekennzeichnet, dass** ein Verhältnis eines minimalen durch die Kugelelemente (44) bildbaren Ringdurchmessers (48) zu einem Durchmesser (46) des führbaren Seils (12) bei 0,6 bis 0,9 liegt.

5. Verbindungssystem (14) nach einem der Ansprüche 1 bis 4, **dadurch gekennzeichnet, dass** das Kugelelement (40) oder die Kugelelemente (44) in oder an einem ein- oder mehrteiligen wenigstens anteilig formelastische Eigenschaften aufweisenden Stützteil (50) angeordnet sind.

6. Verbindungssystem (14) nach einem der Ansprüche 1 bis 5, **dadurch gekennzeichnet, dass** 11 bis 12 Kugelelemente (44) mit einem Durchmesser von 4,5 mm für ein führbares Seil (12) mit einem Durchmesser (46) von 18 mm vorgesehen sind.

7. Verbindungssystem (14) nach einem der Ansprüche 1 bis 6, **dadurch gekennzeichnet, dass** die Einschraubhülse (32) Anlageflächen (52) für ein Einschraubwerkzeug aufweist.

8. Tragstruktur (54), umfassend wenigstens ein Verbindungssystem (14) nach einem der vorhergehenden Ansprüche sowie wenigstens ein Tragstrukturelement (56).

9. Tragstruktur nach Anspruch 8, **dadurch gekennzeichnet, dass** die Tragstruktur (54) ein oder mehrere zusätzliche Spannelemente (60) für Seile (12) zur Herstellung einer schraubenartigen Verbindung (62) umfasst.

## Claims

1. A connection system (14), comprising at least:
- - a connector (10) for attaching a rope (12) to a carrier structure (54), comprising a sleeve (16) which is connectable with a carrier structure element (56) in a form-fitting and/or force-fitting or bonding manner, said sleeve (16) having an inner circumferential surface (18) which has at least one region (20) with an internal thread (22) and which has at least one further region (24) for guiding a rope (12), further comprising a screw-in sleeve (32) which, at least in sections, has an external thread (34) for screwing into the sleeve (16) and which further has an inner circumferential surface (36) for guiding a rope (12), and
- - a rope (12) which is guidable through the sleeve (16) and the screw-in sleeve (32) of the connector (10),
and at least one ball member (40),
**characterized in that**
an inner diameter (26) of the region (20) is larger than a further inner diameter (28) of the further region (24) and the regions (20, 24) are, at least in sections, separated from each other by a bevel (30) such that the at least one ball member (40) is positionable between the bevel (30), a pressure surface (38) of the screw-in sleeve (32), and a rope (12) which is guidable by the sleeve (16) and the screw-in sleeve (32) and, by screwing the screw-in sleeve (32) into the sleeve (16), the guidable rope (12) is fixable along a longitudinal axis (42) by locally deforming the rope (12) and by force fit.

2. The connection system (14) according to Claim 1, **characterized in that** a plurality of ball members (44) are positionable between the bevel (30), the screw-in sleeve (32) and the guidable rope (12).

3. The connection system (14) according to either one of Claims 1 to 2, **characterized in that** the bevel (30) is designed to be rotationally symmetrical for separating the regions (20, 24).

4. The connection system (14) according to either one of Claims 2 or 3, **characterized in that** a ratio of a minimal annular diameter (48) formable by the ball members (44) to a diameter (46) of the guidable rope (12) is 0.6 to 0.9.

5. The connection system (14) according to any one of Claims 1 to 4, **characterized in that** the ball member (40) or the ball members (44) are arranged at a one- or multi-part support part (50) at least partially having resilient features.

6. The connection system (14) according to any one of Claims 1 to 5, **characterized in that** 11 to 12 ball members (44) with a diameter of 4.5 mm are provided for a guidable rope (12) with a diameter (46) of 18 mm.

7. The connection system (14) according to any one of Claims 1 to 6, **characterized in that** the screw-in sleeve (32) has bearing surfaces (52) for a screw-in tool.

8. A carrier structure (54), comprising at least one connection system (14) according to any one of the preceding claims and at least one carrier structure element (56).

9. The carrier structure according to Claim 8, **characterized in that** the carrier structure (54) comprises one or several additional tensioning elements (60) for ropes (12) for making a screw-like connection (62).

## Revendications

1. Système de connexion (14), comprenant au moins :
- un connecteur (10) pour la fixation d'un câble (12) à une structure support (54), comprenant une douille (16) pouvant être connectée à un élément de structure support (56) par accouplement de forme et/ou de force ou de matière, munie d'une surface d'enveloppe intérieure (18), qui comprend au moins une zone (20) munie d'un filetage intérieur (22) et qui comprend au moins une autre zone (24) pour le guidage d'un câble (12), comprenant en outre une douille filetée (32), qui comprend au moins en sections un filetage extérieur (34) pour le vissage dans la douille (16) et qui comprend en outre une surface d'enveloppe intérieure (36) pour le guidage d'un câble (12), et
- un câble (12) pouvant être guidé à travers la douille (16) et la douille filetée (32) du connecteur (10),
et au moins un élément bille (40),
**caractérisé en ce que**
un diamètre intérieur (26) de la zone (20) est supérieur à un autre diamètre intérieur (28) de l'autre zone (24) et les zones (20, 24) sont délimitées l'une de l'autre au moins en sections par un chanfrein (30), de telle sorte que l'au moins un élément bille (40) peut être positionné entre le chanfrein (30), une surface de pression (38) de la douille filetée (32) et un câble (12) pouvant être guidé par la douille (16) et la douille filetée (32), et que le câble pouvant être guidé (12) peut être fixé par vissage de la douille filetée (32) dans la douille (16) avec déformation locale du câble (12) avec la participation d'un accouplement de force le long d'un axe longitudinal (42).

2. Système de connexion (14) selon la revendication 1, **caractérisé en ce qu'**une pluralité d'éléments billes (44) peuvent être positionnés entre le chanfrein (30), la douille filetée (32) et le câble pouvant être guidé (12).

3. Système de connexion (14) selon l'une quelconque des revendications 1 à 2, **caractérisé en ce que** le chanfrein (30) pour la délimitation des zones (20, 24) est configuré sous forme symétrique par rotation.

4. Système de connexion (14) selon l'une quelconque des revendications 2 ou 3, **caractérisé en ce qu'**un rapport entre un diamètre d'anneau minimal (48) pouvant être formé par les éléments billes (44) et un diamètre (46) du câble pouvant être guidé (12) est de 0,6 à 0,9.

5. Système de connexion (14) selon l'une quelconque des revendications 1 à 4, **caractérisé en ce que** l'élément bille (40) ou les éléments billes (44) sont agencés dans ou sur une partie d'appui en une ou plusieurs parties (50) présentant au moins en partie des propriétés d'élasticité de forme.

6. Système de connexion (14) selon l'une quelconque des revendications 1 à 5, **caractérisé en ce que** 11 à 12 éléments billes (44) ayant un diamètre de 4,5 mm sont prévus pour un câble pouvant être guidé (12) ayant un diamètre (46) de 18 mm.

7. Système de connexion (14) selon l'une quelconque des revendications 1 à 6, **caractérisé en ce que** la douille filetée (32) comprend des surfaces d'application (52) pour un outil de vissage.

8. Structure support (54), comprenant au moins un système de connexion (14) selon l'une quelconque des revendications précédentes, ainsi qu'au moins un élément de structure support (56).

9. Structure support selon la revendication 8, **caractérisée en ce que** la structure support (54) comprend un ou plusieurs éléments de serrage supplémentaires (60) pour des câbles (12) pour la création d'une connexion de type hélicoïdal (62).
